# EUROPÄISCHE PATENTANMELDUNG

(11) **EP 4 403 881 A1**
(43) Veröffentlichungstag der Anmeldung: **24.07.2024**
(21) Anmeldenummer: 23152455.4
(22) Anmeldetag: 19.01.2023
(51) Int. Cl.: G01D 5/347, G01D 3/08

(54) **SENSORANORDNUNG UND VERFAHREN ZUM BETRIEB EINER SENSORANORDNUNG**

(71) Anmelder: Leuze electronic GmbH + Co. KG, 73277 Owen/Teck (DE)
(72) Erfinder: Heckmayr, Alexander, 86807 Buchloe (DE); Kirchner, Markus, 72636 Frickenhausen (DE); Feller, Bernhard, 86316 Friedberg (DE); Perchermeier, Dr., Julian, 80637 München (DE); Tkach, Gennady, 81373 München (DE); Linsenmayer, Jörg, 73272 Neidlingen (DE); Wolf, Tilo, 73240 Wendlingen (DE)
(74) Vertreter: Ruckh, Rainer Gerhard

(57) **Zusammenfassung**

Die Erfindung betrifft eine Sensoranordnung (100) mit einem bandförmigen Positionsmaßsystem welches eine Anordnung von Positionsmarken (10) aufweist, in welchen jeweils als Positionswerte die Positionen der Positionsmarken (10) innerhalb des Positionsmaßsystems (2) kodiert sind. Die Sensoranordnung (100) umfasst weiter einen relativ zum Positionsmaßsystem (2) beweglichen optischen Sensor (1), wobei der optische Sensor (1), eine Lichtstrahlen (9) emittierende Sendereinheit, eine Lichtstrahlen (9) empfangende Empfängereinheit und eine Auswerteeinheit (7) zur Auswertung von Empfangssignalen der Empfängereinheit aufweist. Durch Lesen von Positionsmarken (10) mittels des optischen Sensors (1) ist dessen Position relativ zum Positionsmaßsystem (2) bestimmbar. Die Auswerteeinheit (7) weist einen Mehrkernprozessor (16) mit wenigstens zwei Rechenkernen (17a, 17b) auf, wobei die Empfangssignale der Empfängereinheit zweikanalig den Rechenkernen (17a, 17b) zugeführt und dort redundant ausgewertet werden. Die Auswerteeinheit (7) weist einen Watchdog-Controller (18) auf, mittels dessen Funktionen des Mehrkemprozessors (16) überwacht werden.

## Beschreibung

Die Erfindung betrifft eine Sensoranordnung und ein Verfahren zum Betrieb einer Sensoranordnung.

Eine derartige Sensoranordnung ist aus der DE 102 11 779 B4 bekannt. Die dort beschriebene Vorrichtung weist einen optischen Sensor mit einem Sendelichtstrahlen emittierenden Sender, einem Empfangslichtstrahlen empfangenden Empfänger, Mitteln zur Führung der Sendelichtstrahlen innerhalb eines Abtastbereichs und eine Auswerteeinheit zur Auswertung der am Ausgang des Empfängers anstehenden Empfangssignale auf. Mit dem optischen Sensor erfolgt die Erfassung von Positionsmarken, welche ein Positionsmaßsystem bilden. Durch die Erfassung von Positionsmarken des Positionsmaßsystems zu zwei unterschiedlichen Zeitpunkten wird zudem die Geschwindigkeit des optischen Sensors relativ zum Positionsmaßsystem bestimmt.

Der optische Sensor ist besonders vorteilhaft an einem Fahrzeug angebracht, wobei das Positionsmaßsystem stationär an der Fahrbahn angeordnet ist, entlang derer das Fahrzeug bewegt wird. Prinzipiell kann auch ein Positionsmaßsystem bezüglich eines stationär angeordneten optischen Sensors bewegt werden. Durch die fortlaufende Erfassung der Positionsmarken des Positionsmaßsystems werden in dem optischen Sensor kontinuierlich die aktuellen Geschwindigkeits- und Positionsmesswerte ermittelt und an die Steuerung des Fahrzeuges übermittelt. In der Steuerung können diese Messwerte ohne weitere Auswertung und insbesondere ohne jeden Synchronisationsaufwand direkt zur Steuerung des Fahrzeugs verwendet werden.

Generell können derartige Sensoranordnungen auch in sicherheitsrelevanten Applikationen eingesetzt werden. Hierfür muss die Sensoranordnung, insbesondere der optische Sensor, die hierfür geltenden normativen Anforderungen erfüllen, d.h. der optische Sensor muss ein gefordertes Sicherheitsniveau erfüllen und hierzu einen entsprechenden fehlersicheren Aufbau aufweisen.

Dies wird üblicherweise dadurch erreicht, dass die Auswerteeinheit des optischen Sensors zwei unabhängige Prozessoren aufweist, die sich zyklisch selbst und gegenseitig testen. Ein derartiges Sicherheitskonzept ist, insbesondere durch die zyklische Testung der Prozessoren, unerwünscht aufwändig. Zudem weisen die Prozessoren CPUs und Speichereinheiten wie RAM und/oder Flashs auf, so dass diese in der redundanten Rechnerstruktur doppelt vorhanden sind, was einen unerwünscht großen Hardwareaufwand bedeutet.

Der Erfindung liegt die Aufgabe zugrunde eine Sensoranordnung der eingangs genannten Art bereitzustellen, welche mit geringem konstruktiven Aufwand in sicherheitstechnischen Applikationen eingesetzt werden kann.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben

Die Erfindung betrifft eine Sensoranordnung mit einem bandförmigen Positionsmaßsystem welches eine Anordnung von Positionsmarken aufweist, in welchen jeweils als Positionswerte die Positionen der Positionsmarken innerhalb des Positionsmaßsystems kodiert sind. Die Sensoranordnung umfasst weiter einen relativ zum Positionsmaßsystem beweglichen optischen Sensor, welcher eine Lichtstrahlen emittierende Sendereinheit, eine Lichtstrahlen empfangende Empfängereinheit und eine Auswerteeinheit zur Auswertung von Empfangssignalen der Empfängereinheit aufweist. Durch Lesen von Positionsmarken mittels des optischen Sensors ist dessen Position relativ zum Positionsmaßsystem bestimmbar. Die Auswerteeinheit weist einen Mehrkernprozessor mit wenigstens zwei Rechenkernen auf, wobei die Empfangssignale der Empfängereinheit zweikanalig den Rechenkernen zugeführt und dort redundant ausgewertet werden. Die Auswerteeinheit weist einen Watchdog-Controller auf, mittels dessen Funktionen des Mehrkernprozessors überwacht werden.

Die Erfindung betrifft auch ein entsprechendes Verfahren.

Bei der erfindungsgemäßen Sensoranordnung wird eine konstruktiv einfache Sicherheitsstruktur bereitgestellt, mit der die normativen Anforderungen für einen Einsatz im Bereich der Sicherheitstechnik erfüllt werden.

Der Mehrkernprozessor der Auswerteeinheit weist mehrere Rechenkerne auf, in welchen die Empfangssignale der Empfängereinheit direkt, d.h. ohne Einsatz weiterer Prozessoren eingelesen werden, wobei in diesen Rechenkernen eine Auswertung der Empfangssignale durchgeführt wird. Die Daten der Positionsmarken liefern eine erste Relativposition, die mittels gespeicherter Daten in eine grob aufgelöste erste Absolutposition umgerechnet werden. Durch eine zweite Relativposition des Sensors zur Positionsmarke kann die grob aufgelöste erste Absolutposition zu einer fein aufgelösten zweiten Absolutpositon präzisiert werden.

Wesentlich hierbei ist, dass der Mehrkernprozessor kein Sicherheitsbaustein ist, bzw. sein muss, d.h. der Mehrkernprozessor mit seinen Rechenkernen weist für sich alleine keinen fehlersicheren Aufbau auf. Die Rechenkerne des Mehrkernprozessors können damit einen einfachen Aufbau aufweisen. Auch eine gegenseitige zyklische Überprüfung der Rechenkerne ist nicht notwendig.

Das für den Einsatz in der Sicherheitstechnik erforderliche Sicherheitsniveau wird mit Hilfe des Watchdog-Controllers erreicht, der die Rechenkerne des Mehrkernprozessors überwacht.

Vorteilhaft führt der Watchdog-Controller Tests zur Überprüfung der Rechenkerne des Mehrkernprozessors durch.

Insbesondere umfassen die Tests einen Uhrenvergleich, einen Aktivitätstest, das Generieren von Aufgaben für Rechenkerne und das Kontrollieren entsprechender Aufgabenergebnisse, sowie das Überwachen von Spannungen.

Weiterhin initiiert der Watchdog-Controller Selbsttests der Rechenkerne des Mehrkernprozessors.

Dadurch ist eine umfangreiche Prüfung der Rechenkerne des Mehrkernprozessors gewährleistet, wobei mit dieser Prüfung Fehler in den Rechenkernen aufgedeckt werden können.

Generell kann bei Aufdeckung von Fehlern im Mehrkernprozessor eine Störmeldung generiert werden. Weiterhin kann im Fehlerfall der optische Sensor auch stillgesetzt werden oder in einen sicheren Zustand überführt werden, in dem der optische Sensor ein entsprechendes Sicherheitssignal ausgibt.

Gemäß einer konstruktiv vorteilhaften Variante ist der Mehrkernprozessor als Teil eines SoC (Silicium on Chip) ausgebildet, und der Watchdog-Controller ist nicht Bestandteil des SoC.

Der Watchdog-Controller und der Mehrkernprozessor bilden somit separate Hardware-Einheiten.

Zweckmäßig sind der Mehrkernprozessor und der Watchdog-Controller in unterschiedlichen Gehäusen integriert.

Dadurch wird eine räumliche Trennung des Watchdog-Controllers und des Mehrkernprozessors erzielt.

Gemäß einer alternativen konstruktiven Variante ist der Watchdog-Controller von einem Rechenkern des Mehrkernprozessors gebildet.

In diesem Fall ist der Watchdog-Controller Bestandteil des Mehrkernprozessors, wodurch ein besonders kompakter Aufbau der Auswerteeinheit des optischen Sensors erhalten wird.

Generell können die Rechenkerne in Form von CPUs oder DSPs gebildet sein.

Vorteilhaft kommuniziert der Watchdog-Controller mit den Rechenkernen des Mehrkernprozessors über serielle Interfaces oder parallele Inferfaces.

Das serielle Interface kann z.B. von einem Bus gebildet sein. Das parallele Interface kann auch von einem Bussystem gebildet sein. Über das Bussystem ist generell eine Triggerung des Watchdog-Controllers möglich, insbesondere um Tests der Rechenkerne zu initiieren.

Gemäß einer besonders vorteilhaften Ausführungsform wird mittels des Watchdog-Controllers die Ausgabe von Absolutpositionsinformationen gesteuert.

Dabei kann der Watchdog-Controller als Kriterium für die fehlerfreie Funktion der Rechenkerne prüfen, ob diese dieselben Absolutpositionsinformationen generieren und diese nur dann an eine externe Einheit ausgeben.

Besonders vorteilhaft bildet der Watchdog-Controller mit einem oder beiden Rechenkernen einen logischen Kanal zur Ausgabe von Absolutpositionsinformationen. Bei Auftreten von Fehlern wird die Ausgabe der Absolutpositionen unterbrunden.

Im einfachsten Fall überwacht der Watchdog-Controller nur einen Rechenkern und dient gleichzeitig als logischer Ausgabekanal von Relativ- oder Absolutinformation.

Besonders vorteilhaft bildet der Watchdog-Controller mit beiden Rechenkernen oder wenigstens zwei Rechenkernen einen logischen Kanal über welchen die Ausgabe von Absolutpositionsinformationen erfolgt, wobei dann eine mehrkanalige Ausgangsstruktur realisiert ist.

Besonders vorteilhaft ist eine redundante Anordnung von Schnittstellenmodulen vorhanden, über welche Absolutpositionsinformationen an eine externe Einheit ausgebbar sind.

Insbesondere sind zwei Schnittstellenmodule vorhanden, wobei jeweils ein Schnittstellenmodul mit einem Rechenkern verbunden ist.

Die redundanten Schnittstellenmodule sind somit an die redundante Struktur des Mehrkernprozessors angepasst, wobei vorteilhaft immer ein Rechenkern ein Schnittstellenmodul ansteuert.

Dabei kann eine diversitäre Anordnung von Schnittstellenmodulen vorhanden sein.

In diesem Fall sind die Schnittstellenmodule, die technische Einheiten bilden und/oder Datenformate über die Schnittstelle austauschen, unterschiedlich ausgebildet. Zum Beispiel können die Schnittstellen unterschiedliche Pegel oder Datenbreiten haben bzw. ein Kanal hat ein binäres Datenformat, der andere Kanal verwendet einen Gray Code.

Weiterhin kann eine Anordnung von sicherheitsgerichteten oder nicht sicherheitsgerichteten Schnittstellenmodulen vorhanden sein.

Ein sicherheitsgerichtetes Schnittstellenmodul ist ein fehlersicheres bzw. auf Fehler geprüftes Schnittstellenmodul. Beispielsweise können über ein derartiges Schnittstellenmodul ausgelesene Daten in den zugeordneten Rechenkern rückgelesen werden, um so zu prüfen, ob das Schnittstellenmodul fehlerfrei arbeitet. Weiterhin können über derartige Schnittstellenmodule mit Prüfsummen oder dergleichen übertragene Daten gesichert werden.

Gemäß einer vorteilhaften Weiterbildung der Erfindung weist der Mehrkernprozessor mehr als zwei Rechenkerne auf. In zwei Rechenkernen werden die Absolutpositionsinformationen generiert. Der oder die weiteren Rechenkerne steuern und/oder kontrollieren die Kommunikation mit einer externen Einheit.

Der Mehrkernprozessor mit seinen Rechenkernen weist dann eine arbeitsteilige Struktur derart auf, dass ein Teil der Rechenkerne, vorzugsweise zwei Rechenkerne ausschließlich die Auswertung der Empfangssignale der Empfängereinheit übernehmen. Diese Rechenkerne arbeiten dann unbeeinflusst von weiteren Rechenkernen, die die Kommunikation mit externen Einheiten steuern und kontrollieren.

Damit wird eine erhöhte Cybersicherheit erzielt, in dem die für die externe Kommunikation zuständigen Rechenkerne Manipulationen von außen aufdecken und verhindern können. Die für die Auswertung der Empfangssignale zuständigen Rechenkerne sind damit vor externen Manipulationen geschützt.

Der optische Sensor der erfindungsgemäßen Sensoranordnung kann ein scannender Sensor oder auch ein Kamerasensor sein.

Gemäß einer vorteilhaften Ausführungsform bildet der Watchdog-Controller mit einem oder beiden Rechenkernen einen logischen Kanal zur Ausgabe von Absolutpositionsinformationen.

Die Erfindung wird im Folgenden anhand der Zeichnungen erläutert.
- Figur 1:: Schematische Darstellung eines Ausführungsbeispiels der erfindungsgemäßen Sensoranordnung mit einem optischen Sensor und einem Positionsmaßsystem.

- Figur 2:: Variante des optischen Sensors für die Sensoranordnung gemäß Figur 1.
- Figur 3:: Ausführungsbeispiel der Auswerteeinheit des optischen Sensors der erfindungsgemäßen Sensoranordnung.

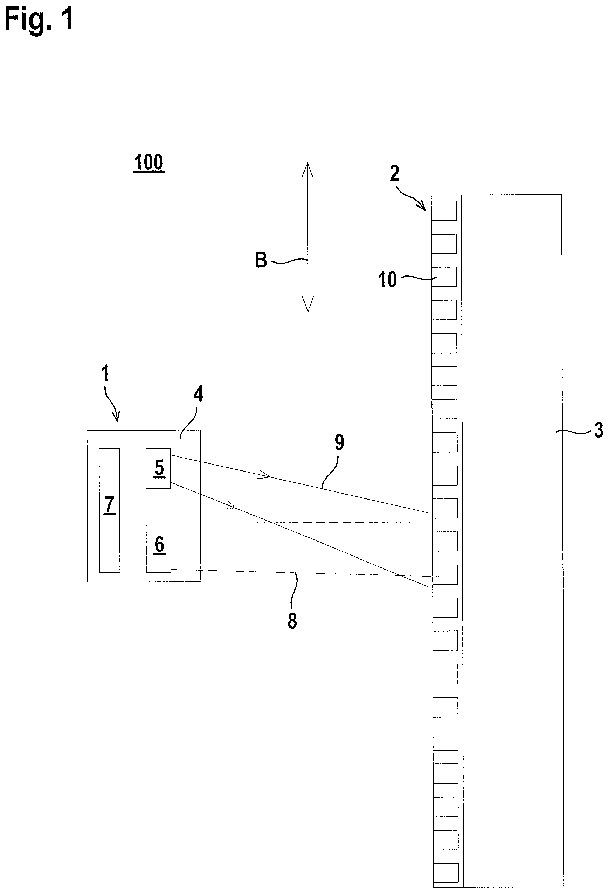

Figur 1 zeigt schematisch ein Ausführungsbeispiel der erfindungsgemäßen Sensoranordnung 100 bestehend aus einem optischen Sensor 1 und einem Positionsmaßsystem 2. Der optische Sensor 1 und/oder das Positionsmaßsystem 2 sind beweglich angeordnet, so dass diese in der mit dem Pfeil B gekennzeichneten Bewegungsrichtung gegeneinander bewegbar sind. Mit der in Figur 1 dargestellten Sensoranordnung 100 können relativ zueinander bewegbare Gegenstände positioniert werden. Im vorliegenden Fall ist ein nicht dargestelltes Fahrzeug gegenüber einem stationären Gegenstand in Form eines Regallagers 3 zu positionieren. Der optische Sensor 1 ist dabei an dem Fahrzeug montiert, während das Positionsmaßsystem 2 am Regallager 3 montiert ist. Das Fahrzeug kann als Regalbediengerät ausgebildet sein.

Zur Erfassung der Fahrzeugposition relativ zum stationären Gegenstand wird das Positionsmaßsystem 2 fortlaufend mit dem optischen Sensor 1 abgetastet.

Der optische Sensor 1 gemäß Figur 1 ist in einem Gehäuse 4 integriert und weist als Sendereinheit eine Beleuchtungseinheit 5 und als Empfängereinheit einen Empfänger 6 in Form einer Flächenkamera auf, die an eine gemeinsame Auswerteeinheit 7 angeschlossen sind.

Die Flächenkamera ist als CCD-Kamera, CMOS-Kamera oder dergleichen ausgebildet und weist eine flächige matrixförmige Anordnung von Empfangselementen bildenden Pixeln auf. Der optische Sensor 1 ist dabei derart am Fahrzeug montiert, dass die Flächenkamera dem Positionsmaßsystem 2 auf gleicher Höhe gegenüberliegt, so dass ein Segment des Positionsmaßsystems 2 im Sichtfeld 8 der Flächenkamera liegt.

Die im Gehäuse 4 stationär angeordnete Beleuchtungseinheit 5 emittiert Lichtstrahlen 9, mittels derer eine homogene Ausleuchtung des im Sichtfeld 8 der Flächenkamera liegenden Segments des Positionsmaßsystems 2 erfolgt. Prinzipiell kann die Beleuchtungseinheit 5 auch außerhalb des Gehäuses 4 angeordnet sein.

Die Beleuchtungseinheit 5 kann Lichtstrahlen 9 im sichtbaren oder unsichtbaren Bereich, insbesondere Infrarotbereich, emittieren.

Das Positionsmaßsystem 2 besteht aus einer Linearanordnung von äquidistant in Reihe angeordneten Positionsmarken 10, wobei die Positionsmarken 10 im vorliegenden Fall als Barcodes ausgebildet sind. Dabei können generell auch 2 Doder 3 D-Codes eingesetzt werden. Natürlich sind auch Anordnungen mit nicht äquidistanten Positionsmarken möglich. In einer speziellen Ausführung können die Distanzunterschiede der Positionsmarken zusätzliche Informationen über die Positionsdaten liefern (Abstandscodierung). In diesem Fall müssen nur vereinzelte Positionsmarken mit Positionsinformationen vorhanden sein. Die Zwischenpositionen können dann keine oder reduzierte Positionsinformationen enthalten.

In den Positionsmarken 10 sind Positionswerte als Positionsinformationen in Form von Absolutpositionen innerhalb des Positionsmaßsystems 2 kodiert. Durch Erfassen der Kodierung der Produktionsmarken 10 und deren Lagen innerhalb der mit der Flächenkamera aufgenommenen Bilder kann die aktuelle Position des optischen Sensors 1 und damit des Fahrzeugs relativ zum Positionsmaßsystem 2 bestimmt werden. Durch eine zeitaufgelöste Auswertung der Positionsinformationen wird zudem die Geschwindigkeit des optischen Sensors 1 relativ zum Positionsmaßsystem 2 bestimmt. Die ermittelten Positions- und Geschwindigkeitswerte werden der Fahrzeugsteuerung zur Verfügung gestellt, so dass anhand dieser das Fahrzeug gesteuert werden kann.

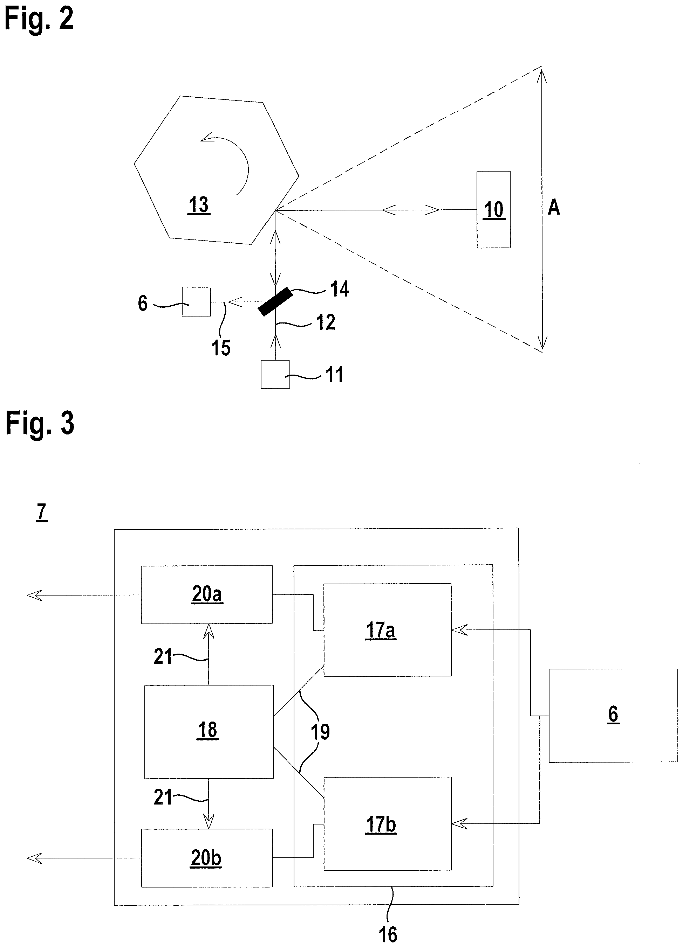

Figur 2 zeigt eine Variante des optischen Sensors 1 in Form eines scannenden Sensors. In diesem Fall werden von einem Sender 11 Sendelichtstrahlen 12 emittiert, die über eine Ablenkeinheit 13 in Form eines sich drehenden, motorisch getriebenen Polygonspiegelrads geführt und dadurch periodisch innerhalb eines Abtastbereichs A geführt sind. Die mittels eines Strahlteilers 14 koaxial zu den Sendelichtstrahlen 12 geführten Empfangslichtstrahlen 15 werden nach Reflexion an der zu erfassenden Positionsmarke 10 über das Polygonspiegelrad zu einem Empfänger 6 geführt. Der Sender 11 kann von einer Laserdiode, der Empfänger 6 von einer Photodiode gebildet sein. Auch in diesem Fall wird für eine genaue Positionsbestimmung die Lage der Positionsmarken 10 innerhalb des Abtastbereichs bestimmt.

Figur 3 zeigt ein Ausführungsbeispiel der Auswerteeinheit 7 des erfindungsgemäßen optischen Sensors 1.

Die Auswerteeinheit 7 bildet eine Sicherheitsfunktion aus, durch welche der optische Sensor 1 im Bereich sicherheitstechnischer Applikationen eingesetzt werden kann.

Die Auswerteeinheit 7 weist einen Mehrkernprozessor 16 mit mehreren Rechenkernen 17a, 17b auf. Im vorliegenden Fall sind zwei Rechenkerne 17a, 17b vorhanden, wobei jeder Rechenkern 17a, 17b in Form einer CPU ausgebildet ist. Alternativ können die Rechenkerne 17a, 17b in Form von DSPs ausgebildet sein. Der Mehrkernprozessor 16 ist vorteilhaft Bestandteil eines SoC (System On a Chip).

Der Mehrkernprozessor 16 ist kein Sicherheitsbaustein, d.h. die Rechenkerne 17a, 17b weisen keinen fehlersicheren Aufbau auf.

Das für den Einsatz im Bereich der Sicherheitstechnik erforderliche Sicherheitsniveau, d.h. die erforderliche Fehlersicherheit der Auswerteeinheit 7, wird durch einen dem Mehrkernprozessor 16 zugeordneten Watchdog-Controller 18 erzielt, der die beiden Rechenkerne 17a, 17b überwacht.

Im vorliegenden Fall ist der Watchdog-Controller 18 nicht Bestandteil des Mehrkernprozessors 16.

Insbesondere kann der Mehrkernprozessor 16 und der Watchdog-Controller 18 in unterschiedlichen Gehäusen 4 integriert sein.

Alternativ kann der Watchdog-Controller 18 von einem Rechenkern des Mehrkernprozessors 16 gebildet sein.

Der Watchdog-Controller 18 ist über ein Interface 19 mit den Rechenkernen 17a, 17b verbunden, wobei das Interface 19 ein serielles oder paralleles Interface 19 sein kann. Der Watchdog-Controller 18 kommuniziert mit den Rechenkernen 17a, 17b über die Interfaces 19.

An jeden der Rechenkerne 17a, 17b ist ein Schnittstellenmodul 20a, 20b angeschlossen. Über die Schnittstellenmodule 20a, 20b werden Ausgangssignale, insbesondere in den Rechenkernen 17a, 17b ermittelte Positions- und/oder Geschwindigkeitsinformationen an eine externe Einheit ausgegeben. Natürlich ist es auch möglich, aus den Positions-/Geschwindigkeitsinformationen abgeleitete Größen auszugeben. Diese können auch andere Bewegungsgrößen wie z.B. Beschleunigung sein. Insbesondere können Ergebnisse aus der Überwachung von Grenzwerten ausgegeben werden.

Die Schnittstellenmodule 20a, 20b können als sicherheitsgerichtete oder nicht sicherheitsgerichete Schnittstellenmodule 20a, 20b ausgebildet sein. Weiterhin können die Schnittstellenmodule 20a, 20b diversitär ausgebildet sein. Die Schnittstellenmodule 20a, 20b sind über Steuerleitungen 21 mit dem Watchdog-Controller 18 verbunden.

Bei der Anordnung gemäß Figur 3 führt der Watchdog-Controller 18 Tests zur Überprüfung der Rechenkerne 17a, 17b des Mehrkernprozessors 16 durch.

Dabei umfassen die Tests einen Uhrenvergleich, einen Aktivitätstest, das Generieren von Aufgaben für Rechenkerne 17a, 17b und das Kontrollieren entsprechender Aufgabenergebnisse, sowie das Überwachen von Spannungen.

Weiterhin initiiert der Watchdog-Controller 18 Selbsttests der Rechenkerne 17a, 17b des Mehrkernprozessors 16.

Weiterhin wird mittels des Watchdog-Controllers 18 die Ausgabe von Positionsinformationen und/oder Geschwindigkeitsinformationen oder daraus abgeleitete Daten beeinflusst.

Im vorliegenden Fall bildet der Watchdog-Controller 18 durch die abwechselnde Zuschaltung zu den Rechenkernen 17a, 17b mit jedem Rechenkern 17a, 17b einen logischen Kanal zur Ausgabe der Absolutpositionsinformationen.

Der Watchdog-Controller 18 steuert und kontrolliert dabei die zweikanalige Ausgabe der Absolutpositionsinformationen über die Schnittstellenmodule 20a, 20b.

### Bezugszeichenliste

- (1): optischer Sensor
- (2): Positionsmaßsystem
- (3): Regallager
- (4): Gehäuse
- (5): Beleuchtungseinheit
- (6): Empfänger
- (7): Auswerteeinheit
- (8): Sichtfeld
- (9): Lichtstrahl
- (10): Positionsmarke
- (11): Sender
- (12): Sendelichtstrahl
- (13): Ablenkeinheit
- (14): Strahlteiler
- (15): Empfangslichtstrahl
- (16): Mehrkernprozessor
- (17a): Rechenkern
- (17b): Rechenkern
- (18): Watchdog-Controller
- (19): Interface
- (20a): Schnittstellenmodul
- (20b): Schnittstellenmodul
- (21): Steuerleitung
- (100): Sensoranordnung

## Patentansprüche

1. Sensoranordnung (100) mit einem bandförmigen Positionsmaßsystem (2), welches eine Anordnung von Positionsmarken (10) aufweist, in welchen jeweils als Positionswerte die Positionen der Positionsmarken (10) innerhalb des Positionsmaßsystems (2) kodiert sind, und mit einem relativ zum Positionsmaßsystem (2) beweglichen optischen Sensor (1), wobei der optische Sensor (1) eine Lichtstrahlen (9) emittierende Sendereinheit, eine Lichtstrahlen (9) empfangende Empfängereinheit und eine Auswerteeinheit (7) zur Auswertung von Empfangssignalen der Empfängereinheit aufweist, wobei durch Lesen von Positionsmarken (10) mittels des optischen Sensors (1) dessen Position relativ zum Positionsmaßsystem (2) bestimmbar ist, **dadurch gekennzeichnet, dass** die Auswerteeinheit (7) einen Mehrkernprozessor (16) mit wenigstens zwei Rechenkernen (17a, 17b) aufweist, wobei die Empfangssignale der Empfängereinheit zweikanalig den Rechenkernen (17a, 17b) zugeführt und dort redundant ausgewertet werden, und dass die Auswerteeinheit (7) einen Watchdog-Controller (18) aufweist, mittels dessen Funktionen des Mehrkernprozessors (16) überwacht werden.

2. Sensoranordnung (100) nach Anspruch 1, **dadurch gekennzeichnet, dass** der Watchdog-Controller (18) Tests zur Überprüfung der Rechenkerne (17a, 17b) des Mehrkernprozessors (16) durchführt.

3. Sensoranordnung (100) nach Anspruch 2, **dadurch gekennzeichnet, dass** die Tests einen Uhrenvergleich, einen Aktivitätstest, das Generieren von Aufgaben für Rechenkerne (17a, 17b) und das Kontrollieren entsprechender Aufgabenergebnisse, sowie das Überwachen von Spannungen umfassen.

4. Sensoranordnung (100) nach einem der Ansprüche 1 bis 3, **dadurch gekennzeichnet, dass** der Watchdog-Controller (18) Selbsttests der Rechenkerne (17a, 17b) des Mehrkernprozessors (16) initiiert.

5. Sensoranordnung (100) nach einem der Ansprüche 1 bis 4, **dadurch gekennzeichnet, dass** der Mehrkernprozessor (16) als Teil eines SoC (System On a Chip) ausgebildet ist, und dass der Watchdog-Controller (18) nicht Bestandteil des SoC ist.

6. Sensoranordnung (100) nach Anspruch 5, **dadurch gekennzeichnet, dass** der Mehrkernprozessor (16) und der Watchdog-Controller (18) in unterschiedlichen Gehäusen (4) integriert sind.

7. Sensoranordnung (100) nach einem der Ansprüche 1 bis 6, **dadurch gekennzeichnet, dass** der Watchdog-Controller (18) von einem Rechenkern des Mehrkernprozessors (16) gebildet ist.

8. Sensoranordnung (100) nach einem der Ansprüche 1 bis 7, **dadurch gekennzeichnet, dass** der Watchdog-Controller (18) mit den Rechenkernen (17a, 17b) des Mehrkernprozessors (16) über ein serielles Interface (19) oder ein paralleles Inferface kommuniziert.

9. Sensoranordnung (100) nach einem der Ansprüche 1 bis 8, **dadurch gekennzeichnet, dass** mittels des Watchdog-Controllers (18) die Ausgabe von Absolutpositionsinformationen und/oder weiteren Informationen gesteuert wird.

10. Sensoranordnung (100) nach Anspruch 9, **dadurch gekennzeichnet, dass** der Watchdog-Controller (18) mit einem oder beiden Rechenkernen (17a, 17b) einen logischen Kanal zur Ausgabe von Absolutpositionsinformationen und/oder anderen Informationen bildet.

11. Sensoranordnung (100) nach Anspruch 10, **dadurch gekennzeichnet, dass** eine redundante Anordnung von Schnittstellenmodulen (20a, 20b) vorhanden ist, über welche Absolutpositionsinformationen und/oder andere Informationen an eine externe Einheit ausgebbar sind.

12. Sensoranordnung (100) nach Anspruch 11, **dadurch gekennzeichnet, dass** zwei Schnittstellenmodule (20a, 20b) vorhanden sind, wobei jeweils ein Schnittstellenmodul (20a, 20b) mit einem Rechenkern (17a, 17b) verbunden ist.

13. Sensoranordnung (100) nach einem der Ansprüche 11 oder 12, **dadurch gekennzeichnet, dass** eine diversitäre Anordnung von Schnittstellenmodulen (20a, 20b) vorhanden ist.

14. Sensoranordnung (100) nach einem der Ansprüche 11 bis 13, **dadurch gekennzeichnet, dass** eine Anordnung von sicherheitsgerichteten oder nicht sicherheitsgerichteten Schnittstellenmodulen (20a, 20b) vorhanden ist.

15. Sensoranordnung (100) nach einem der Ansprüche 1 bis 14, **dadurch gekennzeichnet, dass** der Mehrkernprozessor (16) mehr als zwei Rechenkerne (17a, 17b) aufweist, wobei in zwei Rechenkernen (17a, 17b) die Absolutpositionsinformationen und/oder andere Informationen generiert werden, und wobei der oder die weiteren Rechenkerne die Kommunikation mit einer externen Einheit steuern und/oder kontrollieren.

16. Sensoranordnung (100) nach einem der Ansprüche 1 bis 15, **dadurch gekennzeichnet, dass** die Rechenkerne (17a, 17b) in Form von CPUs oder DSPs gebildet sind.

17. Sensoranordnung (100) nach einem der Ansprüche 1 bis 16, **dadurch gekennzeichnet, dass** der optische Sensor (1) ein scannender Sensor ist.

18. Sensoranordnung (100) nach einem der Ansprüche 1 bis 16, **dadurch gekennzeichnet, dass** der optische Sensor (1) ein Kamerasensor ist.

19. Sensoranordnung (100) nach einem der Ansprüche 1 bis 18, **dadurch gekennzeichnet, dass** der optische Sensor (1) an einem Fahrzeug angeordnet ist und dass das Positionsmaßsystem (2) an einer Fahrbahnbegrenzung angebracht ist.

20. Verfahren zum Betrieb einer Sensoranordnung (100) mit einem bandförmigen Positionsmaßsystem (2), welches eine Anordnung von Positionsmarken (10) aufweist, in welchen jeweils als Positionswerte die Positionen der Positionsmarken (10) innerhalb des Positionsmaßsystems (2) kodiert sind, und mit einem relativ zum Positionsmaßsystem (2) beweglichen optischen Sensor (1), wobei der optische Sensor (1) eine Lichtstrahlen (9) emittierende Sendereinheit, eine Lichtstrahlen (9) empfangende Empfängereinheit und eine Auswerteeinheit (7) zur Auswertung von Empfangssignalen der Empfängereinheit aufweist, wobei durch Lesen von Positionsmarken (10) mittels des optischen Sensors (1) dessen Position relativ zum Positionsmaßsystem (2) bestimmbar ist, **dadurch gekennzeichnet, dass** die Auswerteeinheit (7) einen Mehrkernprozessor (16) mit wenigstens zwei Rechenkernen (17a, 17b) aufweist, wobei die Empfangssignale der Empfängereinheit zweikanalig den Rechenkernen (17a, 17b) zugeführt und dort redundant ausgewertet werden, und dass die Auswerteeinheit (7) einen Watchdog-Controller (18) aufweist, mittels dessen Funktionen des Mehrkernprozessors (16) überwacht werden.
